# EUROPEAN PATENT SPECIFICATION

(11) **EP 0 398 710 B1**
(45) Date of publication and mention of the grant of the patent: **28.08.1996**
(21) Application number: 90305330.4
(22) Date of filing: 17.05.1990
(51) Int. Cl.: H04B 7/08

(54) **Diversity receiving apparatus**
Diversity-Empfangsgerät
Dispositif de réception en diversité

(30) Priority: 18.05.1989 JP 125632/89
(43) Date of publication of application: 22.11.1990
(73) Proprietor: NEC CORPORATION, Tokyo (JP)
(72) Inventor: Fukumura, Yukio c/o NEC Corporation, Minato-ku Tokyo (JP)
(74) Representative: Orchard, Oliver John

(56) References cited:
- GB-A- 255 987
- PATENT ABSTRACTS OF JAPAN vol. 13, no.330 [E-793][3678] 25 July 1989
- PATENT ABSTRACTS OF JAPAN vol. 13, no. 264 [E-774 ] (3612) 19 June 1989
- PATENT ABSTRACTS OF JAPAN vol. 10, no. 268 (E-436)(2324) 12 September 1986

## Description

The present invention relates to a diversity receiving apparatus for receiving a signal by space diversity and, more particularly, to a vehicle-mounted space diversity receiving apparatus.

A diversity receiving apparatus for receiving signals transmitted by radio waves by space diversity is known in the art. This kind of receiving apparatus has a plurality of antennas for picking up radio signals. The signals picked up by the individual antennas are switched over or combined and then fed to a diversity receiver. A prerequisite with such an apparatus is that the antennas be spaced apart from each other. When the diversity receiving apparatus is mounted on a vehicle, the individual antennas are affixed to the roof, windshields and so forth of the vehicle. Each antenna is connected to the diversity receiver by an exclusive antenna feeder which propagates a signal therethrough.

When one of antenna circuits or channels included in the diversity receiving apparatus and constituted by an antenna, antenna feeder and so forth fails, the apparatus is capable of receiving a signal by the other antenna circuits. In this condition, despite that the receiving ability of the apparatus has been degraded, the reception seemingly remains normal. The user, therefore, often overlooks such a failure of the antenna circuit. This problem is especially serious when it comes to a vehicle-mounted diversity receiving apparatus, because antenna feeders of the apparatus are apt to break due to vibrations and impacts particular to on-road vehicles.

In Patents Abstracts of Japan, Vol. 13 Number 330 (E-793) (3678) dated July 25 1989 and in Japanese patent application number 1-93936, in the name of Mazda Motor Corp, there was proposed an arrangement for determining the condition of an unused antenna, i.e. whether its installation state was proper or not, which included a manually operated switch for switching to the selected antenna.

In Patents Abstracts of Japan, Vol. 13 Number 264(E774) (3612) dated June 19 1989 and Japanese patent application number 1-55923, in the name of Fujitsu Ltd, there is described an arrangement for use in assisting in identifying and distinguishing a fault in a receiver circuit from a fault in a line, which includes an inverse synthesizer synthesizing the phase of a signal received by a main and sub-antenna in opposite phase and a detection circuit detecting a periodic minute level of a phase shifter appearing at the output of the inverse synthesizer.

A feature of the present invention is the provision of a diversity receiving apparatus capable of readily detecting the deterioration of a receiving ability ascribable to the breakage of an antenna feeder.

A diversity receiving apparatus to be described below has a plurality of antennas for receiving signals transmitted by radio waves; diversity receiving section means for receiving one of the signals coming in through the antennas; antenna feeder means for connecting the antennas to the diversity receiving section, respectively; and means for detecting breakage of any of the antenna feeders.

Preferably, the detecting means has a power source connected through a resistor to one end of the antenna feeder connecting the diversity receiving section and an antenna whose radiation element is connected to ground, and a detecting circuit connected to the one end of the antenna feeder for detecting a variation in the potential appearing on the one end. On the breakage of the antenna feeder, the detecting circuit turns on a light emitting diode in response to the resultant increase in the potential. This facilitates the detection of the breakage of an antenna feeder which degrades the receiving ability of the diversity receiving apparatus.

The following description and drawings disclose, by means of examples, the invention which is characterised in the appended claims, whose terms determine the extent of the protection conferred hereby.

In the drawings:-
Fig. 1 is a block diagram schematically showing a diversity receiving apparatus embodying the present invention;
Fig. 2 is a partly taken away perspective view of an antenna included in the Fig. 1 apparatus; and
Fig. 3 is a schematic block diagram showing an alternative embodiment of the diversity receiving apparatus in accordance with the present invention.

### DETAILED DESCRIPTION OF THE PREFERRED EMBODIMENTS

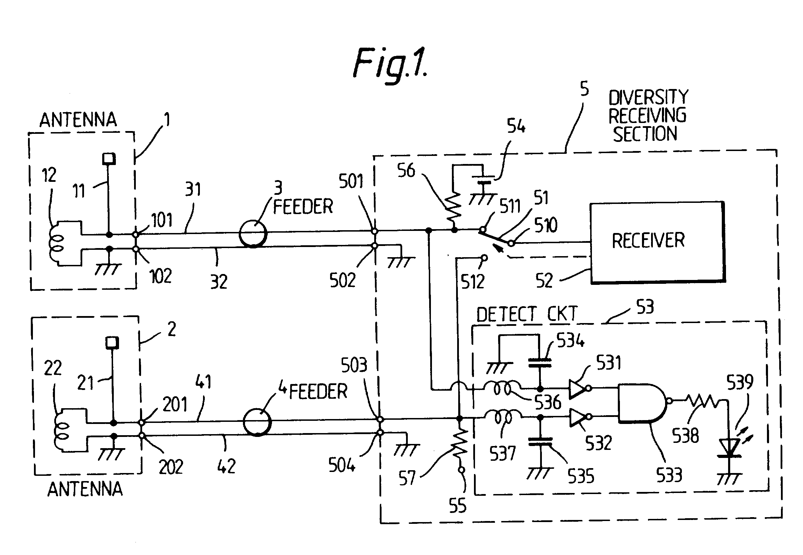

In Fig. 1, a diversity receiving apparatus includes rod antennas 1 and 2. The rod antennas 1 and 2 are connected to a diversity receiving section 5 through antenna feeders 3 and 4, respectively. The rod antenna 1 comprises a radiation element 11 whose one end is grounded through a choke coil or inductance 12 and connected to one end 101 of the hot line 31 of antenna feeder 3. The outer conductor 32 of antenna feeder 3 is connected to ground through its ends 102 and 502. Likewise, the rod antenna 2 comprises a radiation element 21 whose one end is grounded through a choke coil or inductance 22 and connected to one end 201 of the hot line 41 of antenna feeder 4. The outer conductor 42 of antenna 4 is connected to ground through its ends 202 and 504.

The diversity receiving section 5 comprises an antenna switch 51 whose one input terminal 511 is connected to the other end 501 of hot line 31. The other input terminal 512 of antenna switch 51 is connected to the other end 503 of hot line 41. The output terminal of switch 51 is connected to the input of a receiver 52.

The diversity receiving section 5 also comprises a breakage detecting circuit 53 which includes a pair of low-pass filters each having a choke coil or inductance 536 or 537 and a capacitor 534 or 535. One end of coil 536 is connected to the other end 501 of feeder hot line 31 while one end of coil 537 is connected to the other end 503 of feeder hot line 41. The other end of coil 536 is connected to ground through 534 while the other end of coil 537 is connected to ground through the capacitor 535. The junction of coil 536 and capacitor 534 is connected to one of two inputs of NAND gate 533 through an inverter 531. The junction of coil 537 and capacitor 535 is connected to the other of two NAND gate 533 inputs through an inverter 532. The output of NAND gate 533 is connected to the anode of a light emitting diode (LED) 539 through a resistor 538. The cathode of LED 539 is grounded.

The diversity receiving section 5 further comprises a direct current (DC) voltage source 54 which applies a positive potential V to the other ends 501 and 503 through resistors 56 and 57, respectively. One end of resistor 57 is connected to the positive terminal of voltage source 54 through a terminal 55.

In operation, the radiating element 11 picks up a radio frequency signal and provides the picked-up signal to the antenna switch 51 through the antenna feeder 3. The choke coil 12 blocks the picked-up radio grequency signal while passing a signal having a lower frequency than the frequency of the radio frequency signal. The radiating element 21 picks up a radio frequency signal and provides the picked-up signal to the antenna switch 51 through the antenna feeder 4. The choke coil 22 has the same function as the choke coil 12. The antenna switch provides the receiver 52 with one of radio signals from the antennas 1 and 2 under control of the receiver 52. The receiver controls the switchover of antenna switch 51 based on, for example, the field strength levels obtained from the radio frequency signals. The above-mentioned antenna diversity operation is well known in the art and thus no further description thereabout will be provided in this specification. It should be noted that the present apparatus may use other types of diversity reception, for example, a signal combining diversity reception.

Even if one of antenna feeders 3 and 4 fails, the receiver 52 can still receive a radio signal due to the diversity function. More specifically, if the antenna feeder 3 is broken, the antenna switch 51 provides a radio frequency signal from the antenna 2 to the receiver 52. Thus, the user overlooks the breakage of the antenna feeder 3. The present invention prevents this overlooking by adding the breakage detecting circuit 53.

So long as the hot line 31 of antenna feeder 3 is held in normal connection, the DC potential at the terminal 501 remains in a ground level of "L", because the terminal 501 is grounded through the hot line and the coil 12. When the hot line 31 is broken, the DC potential at the terminal 501 turns to the voltage V or "H". Likewise, the hot line 41 of antenna feeder 4 is held in normal connection, the DC potential at the terminal 503 remains in "L", while when the hot line 41 is broken, the DC potential at the terminal 503 turns to "H". It follows that the output of NAND gate 533 is in "L" only when both the hot lines 31 and 41 are connected normally, maintaining the LED 539 turned off. On the other hand, when at least one of the hot lines 31 and 41 is broken, the output level of the NAND gate 533 turns from "L" to "H" with the result that the LED 539 glows. The low-pass filter including the coil 536 or 537 and the capacitor 534 or 535 blocks signals having frequencies close to the frequency of signals coming in through the associated rod antenna 1 or 2, while passing signals having lower frequencies than the same.

In the above construction, assume that either one of the antenna feeders 3 and 4 inclusive of the hot lines 31 and 41 has been broken, but a radio frequency signal is being received by either one of the antennas 1 and 2. Even in such a condition which seemingly is normal, the user of the apparatus is alerted to the breakage of the antenna feeder 3 or 4 by the LED 539 which will be glowing then. The LED 539 may be replaced by a bleeper which generates an alert tone in response to the "H" output of NAND gate 533.

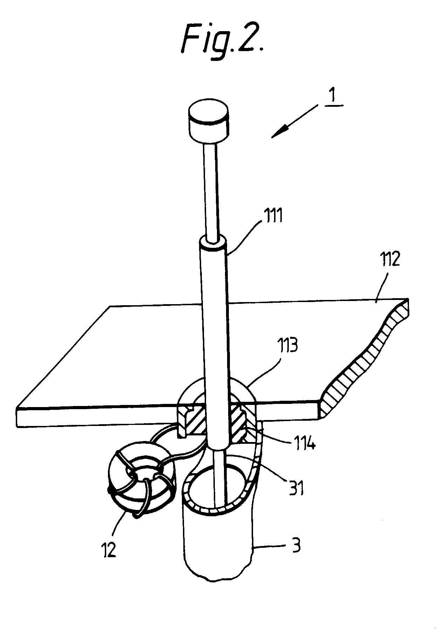

Referring to Fig. 2, the rod antenna 1 has a radiation element 111, a ground plate 112 made of metal, a retainer 113 also made of metal, a dielectric 114 which is inherently low in loss for a received radio signal, and the choke coil 12. The retainer 113 is welded or otherwise affixed to the ground plate 112, while the radiation element 111 is affixed to the retainer 113 with the intermediary of the dielectric 114. The choke coil 12 is connected at one terminal to the base portion of the radiation element 111 and at the other terminal to the retainer 113 by welding or similar technology. The hot line 31 of the antenna feeder 3, or the center conductor of the coaxial cable in the illustrative embodiment, is received in and connected to the base portion of the radiator 111. The choke coil 12 is welded or otherwise rigidly connected to the ground plate 112. The other rod antenna 2 has the same structure as the rod antenna 1.

The illustrative embodiment has two rod antennas 1 and 2 each being connected to the diversity receiving section by an exclusive antenna feeder. Of course, such an arrangement is similarly applicable to a diversity receiving apparatus having three or more antennas. Assume that some antennas are connected to a diversity receiving section via individual antenna feeders and the others are directly connected to the diversity receiving section, as practiced from time to time. Then, the circuitry responsive to the breakage of an antenna feeder will of course be associated only with those antenna circuits which have the antenna feeders.

The rod antennas shown in Figs. 1 and 2 have radiation elements which are not connected to ground and, therefore, each may be implemented as a whip antenna, as desired. When use is made of an antenna whose radiation element is directly connected to ground, i.e., a unipole antenna having a grounded matching stub, the choke coil 12 for indirectly connecting the radiation element to ground is not necessary. While the choke coils 12 and 22 each serving as a lumped constant circuit are used as circuits which block signals and exhibit a low resistance for DC, they may be replaced with distributed constant circuits having a similar impedance characteristics

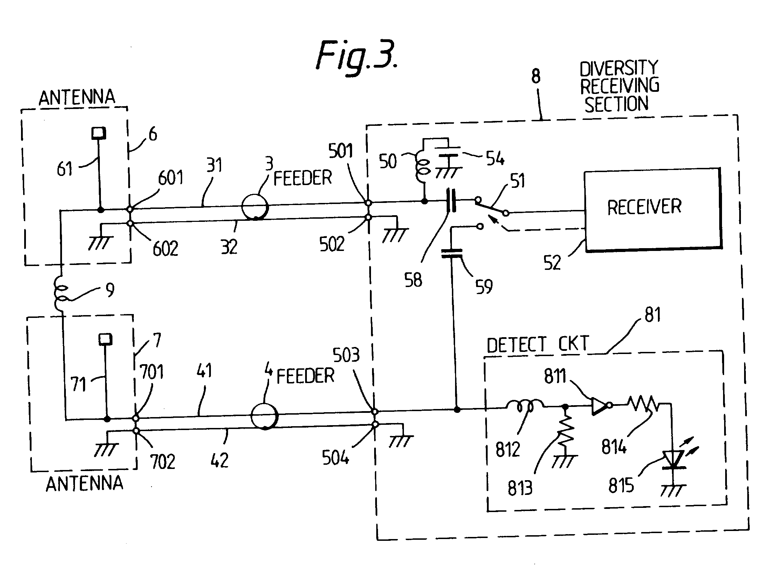

Referring to Fig. 3, an alternative embodiment of the diversity receiving apparatus in accordance with the present invention is shown. In the figures, the same or similar components are designated by like reference numerals, and redundant description will be avoided for simplicity. In Fig. 3, the diversity receiving apparatus has two antennas 6 and 7, antenna feeders 3 and 4 connected at one ends to the antennas 6 and 7, respectively, a diversity receiving section 8 connected to the other ends of the antenna feeders 3 and 4, and a choke coil 9.

The antennas 6 and 8 have radiation elements 61 and 71, respectively. The choke coil 9 chokes received signals associated with the radiation elements 61 and 71 and connects the elements 61 and 71 with respect to DC. The radiation elements 61 and 71 are not connected to ground.

The diversity receiving section 8 has an antenna switch 51, a receiver 52 for diversity reception, a detecting circuit 81, capacitors 58 and 59, and a DC voltage source 54. The antenna switch 51 is connected at one input terminal to the other end 501 of the antenna feeder 3 through the capacitor 58 and connected at the other input terminal to the other end 503 of the antenna feeder 4 through the capacitor 59. The receiver 52 controls the switchover of the switch 51, as in the Fig. 1 apparatus. The capacitors 58 and 59 pass signals coming in through the associated antennas 6 and 7 while blocking DC.

The other end 501 of the hot line 31 of the antenna feeder 3 is connected to the DC voltage source 54 through a choke coil 50. The detecting circuit 81 is connected to the other end 503 of the hot line 41 of the antenna feeder 4 so as to monitor the DC potential appearing there.

The detecting circuit 81 includes an inverter 811, a choke coil 812 connected between the input terminal of inverter 811 and the other end 503 of the hot line 41, a resistor 813 connected between the input terminal of inverter 811 and ground, a resistor 814 connected at one end to the output of inverter 811, and an LED 815 whose anode and cathode are connected to the other end of resistor 814 and ground, respectively. The choke coil 812 blocks a signal coming in through the antenna 7 while exhibiting a low resistance for DC.

The input terminal of inverter 811 is connected to the voltage source 54 through the choke coil 812, antenna feeder 4, antenna 7, choke coil 9, antenna 6, antenna feeder, and choke coil 50. The output terminal of inverter 811 is connected to ground through the LED 815. In this configuration, when the hot lines 31 and 41 of the antenna feeders 3 and 4 are not broken, the level on the input terminal of inverter 811 is "H" while the level on the output terminal of the same is "L". When at least one of the hot lines 31 and 41 is broken, the input and output terminals of inverter 811 turn to "L" and "H", respectively. As a result, the LED 815 is turned on to alert the user of the apparatus to the breakage of the antenna feeder 3 inclusive of the hot line 31 or the antenna feeder 4 inclusive of the hot line 41.

In summary, it will be seen that the present invention has breakage detecting circuit detecting the breakage of an antenna feeder and thereby prevents the user from overlooking the fact that the diversity reception effect has been lost and, therefore, the receiving ability has been lowered due to the breakage of an antenna feeder.

## Claims

1. A diversity receiving apparatus including a plurality of antennas (1) (2) for receiving radio frequency signals, a diversity receiving section (5) for receiving the radio frequency signals coming in through the plurality of antennas (1) (2), at least one antenna feeder (3) (4) connecting an associated one of the plurality of antennas (1) (2) to the diversity receiving section (5), and means (54) for applying a DC voltage to an antenna feeder (3) (4), the magnitude of the DC voltage being independent of the radio frequency signals,
characterised in that there is provided means (53) for detecting a change in the DC voltage, so that breakage of an antenna feeder (3) (4) may be detected irrespective of the levels of the radio frequency signals.

2. An apparatus as claimed in claim 1, wherein one of the plurality of antennas (1) (2) includes a radiation element (11) (21), and a signal blocking circuit (12) (22) connected at one end thereof to the radiation element (11) (21) and at the other end thereof to ground for choking a radio frequency signal and exhibiting a low resistance with respect to DC.

3. An apparatus as claimed in claim 2, wherein the signal blocking circuit includes a choke coil (12) (22).

4. An apparatus as claimed in claim 2, wherein the one antenna (1) (2) has a radiation element (11) (21) whose one end is connected to one end of the antenna feeder (3) (4) and a structure in which the radiation element (11) (21) is connected to ground via the signal blocking circuit (12) (22).

5. An apparatus as claimed in claim 4, wherein the detecting means includes a light emitting diode (539) for reporting the breakage of an antenna feeder (3) (4).

6. A diversity receiving apparatus as claimed in claim 1 including only two antennas (1) (2) each having a radiation element (11) (21), a choke coil (12) (22) connecting the two antennas (1) (2) to each other, a first and a second antenna feeder (3) (4), each being connected at one end to a respective one of the two antennas (1) (2), means (51) for selectively connecting the other end of the first and second antenna feeders (3) (4) to the diversity receiving section (5) with respect to DC, and a power source (54) connected to the other end of the first antenna feeder (3) for applying a predetermined DC potential to the other end of the first antenna feeder, in which the detecting circuit (53) is connected to the other end of one of the antenna feeders (3) for detecting a variation in a DC potential appearing on the other end of the other antenna feeder (4).

7. An apparatus as claimed in claim 6, wherein the detecting circuit (53) includes a light emitting diode (539) for reporting the breakage of an antenna feeder (3) (4).

8. An apparatus as claimed in claim 6 or claim 7, wherein the voltage supply means (54) applies a DC voltage on both the first and second antenna feeder means (3) (4), and wherein the detecting means (53) detects a change in the DC voltage applied on either the first or the second antenna feeder means (3) (4).

9. An apparatus as claimed in claim 8, wherein the detecting means (53) includes first means (533) for detecting the change to produce a detect signal, and alert means (539) responsive to the detect signal for producing an alert signal.

10. An apparatus as claimed in claim 9, wherein the alert means includes an LED which glows in response to the detect signal.

11. An apparatus as claimed in claim 9, wherein the alert means includes a bleeper for generating an alert tone in response to the detect signal.

12. An apparatus as claimed in claim 6 or claim 7, wherein the diversity receiver means (5) includes an antenna switch (51) for selecting one of the radio frequency signals in response to a switch control signal, and a diversity receiver (52) for receiving the selected radio frequency signal and producing the switch control signal based on the radio frequency signals.

13. An apparatus as claimed in any one of the preceding claims, wherein the detecting means (53) includes first and second low-pass filter means (12) (22) whose inputs are coupled to one end of the first and second feeder means (3)(4), respectively, first and second inverter means (531) (532) whose inputs are coupled to the outputs of the first and second low-pass filter means (12) (22), respectively, NAND gate means (533) whose two inputs are coupled to the outputs of the first and second inverter means (531) (532), respectively, and LED means (539) coupled between the output of the NAND gate means (533) and ground.

14. An apparatus as claimed in any one of claims 1 to 12, wherein the detecting means (53) includes first and second low-pass filter means (536, 534) (537, 535) whose inputs are coupled to one end of the first and second feeder means (3)(4), respectively, first and second inverter means (531) (532) whose inputs are coupled to the outputs of said first and second low-pass filter means (536,534) (537,535) respectively; NAND gate means (533) whose two inputs are coupled to the outputs of the first and second inverter means (531) (532), respectively, and tone generator means for generating an alert tone in response to a status change in the output of said NAND gate means (533).

15. An apparatus as claimed in any one of claims 1 to 12, wherein the detecting means includes low-pass filter means (536, 534) (537,535) whose input is coupled to the one end of the second feeder means (3) (4), inverter means (531) (532) whose input is coupled to the output of the low-pass filter means (536,534) (537,535), and LED means (539) connected between the output of the inverter means (531) (532) and ground.

16. An apparatus as claimed in claim 15, wherein the detecting means includes low-pass filter means (536,534) (537,535) whose input is coupled to the one end of the second feeder means (3) (4), and alert means for generating an alert tone in response to the output of the low-pass filter means.

17. A method of detecting the breakage of either one of first and second antenna feeders (3) (4) which feed radio frequency signals from first and second antennas (11) (21), respectively, to a diversity receiver (5), the method including the steps of feeding a first radio frequency signal from the first antenna (11) (21) to the diversity receiver (5) through the first antenna feeder (3) (4), feeding a second radio frequency signal from a second antenna to the diversity receiver (5) through the second antenna feeder (3) (4), and applying a DC voltage to the first antenna feeder (3) (4), the magnitude of the DC voltage being independent of the radio frequency signals, characterised in that the method further includes the step of detecting a voltage change in the DC voltage to produce a detect signal.

18. A method as claimed in claim 17, further including the step of, responsive to the detect signal, annunciating the failure of either the first or the second antenna feeder.

19. A method as claimed in claim 18, wherein the annunciating step comprises the step, responsive to the detect signal, of causing an LED to glow.

20. A method as claimed in claim 19, wherein the annunciating step comprises the step, responsive to the detect signal, of causing a tone generator to generate an alert tone.

21. A method as claimed in claim 19, further including the step of selectively receiving one of the first and second radio frequency signals at the diversity receiver.

## Patentansprüche

1. Diversity-Empfangsvorrichtung mit mehreren Antennen (1, 2) zum Empfang von Funkwellensignalen, einem Diversity-Empfangsabschnitt (5) zum Empfangen der über die mehreren Antennen (1, 2) hereinkommenden Funkfrequenzsignale, zumindest einem Antennenkabel (3, 4) , das eine zugeordnete von den mehreren Antennen (1, 2) mit dem Diversity-Empfangsabschnitt (5) verbindet, und einer Einrichtung zum Anlegen einer Gleichspannung an ein Antennenkabel (3, 4), wobei die Höhe der Gleichspannung von den Funkfrequenzsignalen unabhängig ist, dadurch gekennzeichnet, daß eine Einrichtung (53) zum Detektieren einer Änderung in der Gleichspannung bereitgestellt ist, so daß der Bruch eines Antennenkabels (3, 4) unabhängig von den Pegeln der Funkfrequenzsignale detektiert werden kann.

2. Vorrichtung nach Anspruch 1, wobei eine der mehreren Antennen (1, 2) ein Strahlelement (11, 12) enthält, und eine Signalabblockschaltung (12, 22) an ihrem einen Ende mit dem Strahlelement (11, 21) und an ihrem anderen Ende mit Masse verbunden ist, um ein Funkfrequenzsignal abzublocken und einen niedrigen Gleichstromwiderstand aufzuweisen.

3. Vorrichtung nach Anspruch 2, wobei die Signalabblockschaltung eine Drosselspule (12, 22) enthält.

4. Vorrichtung nach Anspruch 2, wobei die eine Antenne (1, 2) ein Strahlelement (11, 21) aufweist, dessen eines Ende mit dem einen Ende des Antennenkabels (3, 4) und einer Struktur verbunden ist, in welcher das Strahlelement (11, 21) mit Masse über die Signalabblockschaltung (12, 22) verbunden ist.

5. Vorrichtung nach Anspruch 4, wobei die Detektionseinrichtung eine lichtemittierende Diode (539) zum Melden eines Bruchs eines Antennenkabels (3, 4) enthält.

6. Diversity-Empfangsvorrichtung nach Anspruch 1, die nur zwei Antennen (1, 2) jeweils mit einem Strahlelement (11, 21), eine die zwei Antennen (1, 2) miteinander verbindende Drosselspule (12, 22), ein erstes und ein zweites Antennenkabel (3, 4), wovon jedes an einem Ende mit einem entsprechenden Ende der zwei Antennen (1, 2) verbunden ist, eine Einrichtung (51) zum selektiven Verbinden des anderen Endes des ersten und zweiten Antennenkabels (3, 4) mit dem Diversity-Empfangsabschnitt (5) in Bezug auf Gleichstrom, und eine Energiequelle (54),die mit dem anderen Ende des ersten Antennenkabels (3) zum Anlegen eines vorgegebenen Gleichspannungspotential an das andere Ende des ersten Antennenkabels verbunden ist, enthält, in welcher die Detektionsschaltung (53) mit dem anderen Ende des einen Antennenkabels (3) zum Detektieren einer Änderung in einem an dem anderen Ende des anderen Antennenkabels (4) auftretenden Gleichspannungspotentials verbunden ist.

7. Vorrichtung nach Anspruch 6, wobei die Detektionsschaltung (53) eine lichtemittierende Diode (539) zum Melden eine Bruchs eines Antennenkabels (3, 4) enthält.

8. Vorrichtung nach Anspruch 6 oder Anspruch 7, wobei die Spannungsversorgungseinrichtung (54) eine Gleichspannung sowohl an die erste als auch zweite Antennenkabeleinrichtung (3, 4) anlegt, und wobei die Detektionseinrichtung (53) eine Änderung in der entweder an die erste oder die zweite Antennenkabeleinrichtung (3, 4) angelegten Gleichspannung detektiert.

9. Vorrichtung nach Anspruch 8, wobei die Detektionseinrichtung (53) eine erste Einrichtung (533) zum Detektieren der Änderung, um ein Detektionssignal zu erzeugen, und eine auf das Detektionssignal reagierende Alarmeinrichtung (539) zum Erzeugen eines Alarmsignals enthält.

10. Vorrichtung nach Anspruch 9, wobei die Alarmeinrichtung eine LED enthält, welche als Reaktion das Detektionssignal leuchtet.

11. Vorrichtung nach Anspruch 9, wobei die Alarmeinrichtung einen Piepser zum Erzeugen eines Alarmtones als Reaktion auf das Detektionssignal enthält.

12. Vorrichtung nach Anspruch 6 oder Anspruch 7, wobei die Diversity-Empfänger-Einrichtung (5) einen Antennenschalter (51) zum Auswählen eines Funkfrequenzsignals als Reaktion auf ein Schaltersteuerungssignal, und einen Diversity-Empfänger (52) zum Empfangen des ausgewählten Funkfrequenzsignals und Erzeugen des Schaltersteuerungssignals auf der Basis der Funkfrequenzsignale enthält.

13. Vorrichtung nach einem der vorstehenden Ansprüche, wobei die Detektionseinrichtung (53) eine erste und eine zweite Tiefpaßfiltereinrichtung (12, 22), deren Eingänge mit dem einen Ende der ersten bzw. zweiten Kabeleinrichtung (3, 4) verbunden sind, eine erste und zweite Invertereinrichtung (531, 532), deren Eingänge mit den Ausgängen der ersten bzw. zweiten Tiefpaßfiltereinrichtung (11, 22) verbunden sind, eine NAND-Gatter-Einrichtung (533), deren zwei Eingänge mit den Ausgängen der ersten bzw. zweiten Invertereinrichtung (531, 532) verbunden sind, und eine LED-Einrichtung (539) enthält, die zwischen dem Ausgang der NAND-Gatter-Einrichtung (533) und Masse angeschlossen ist.

14. Vorrichtung nach einem der Ansprüche 1 bis 12, wobei die Detektionseinrichtung (53) eine erste und eine zweite Tiefpaßfiltereinrichtung (536, 534; 537, 535), deren Eingänge mit dem einen Ende der ersten bzw. zweiten Kabeleinrichtung (3, 4) verbunden sind, eine erste und zweite Invertereinrichtung (531, 532) , deren Eingänge mit den Ausgängen der ersten bzw. zweiten Tiefpaßfiltereinrichtung (536, 534; 537, 535) verbunden sind, eine NAND-Gatter-Einrichtung (533), deren zwei Eingänge mit den Ausgängen der ersten bzw. zweiten Invertereinrichtung (531, 532) verbunden sind, und eine Tongenerator-Einrichtung (539) zum Erzeugen eines Alarmtons als Reaktion auf eine Statusänderung in dem Ausgangssignal der NAND-Gatter-Einrichtung (533) enthält.

15. Vorrichtung nach einem der Ansprüche 1 bis 12 , wobei die Detektionseinrichtung (53) eine Tiefpaßfiltereinrichtung (536, 534; 537, 535), deren Eingang mit dem einen Ende der zweiten Kabeleinrichtung (3, 4) verbunden ist, eine Invertereinrichtung (531, 532), deren Eingang mit dem Ausgang der Tiefpaßfiltereinrichtung (536, 534; 537, 535) verbunden ist, und eine LED-Einrichtung (539) enthält, die zwischen dem Ausgang der Invertereinrichtung (531, 532) und Masse angeschlossen ist.

16. Vorrichtung nach Anspruch 15, wobei die Detektionseinrichtung eine Tiefpaßfiltereinrichtung (536, 534; 537, 535), deren Eingang mit dem einen Ende der zweiten Kabeleinrichtung (3, 4) verbunden ist, und eine Alarmeinrichtung zum Erzeugen eines Alarmtones als Reaktion auf das Ausgangssignal der Tiefpaßfiltereinrichtung enthält.

17. Verfahren zum Detektieren des Bruchs entweder eines ersten oder zweiten Antennenkabels (3, 4), welche Funkfrequenzsignale von der ersten bzw. zweiten Antenne (11, 21) zu einem Diversity-Empfänger (5) führen, wobei das Verfahren die Schritte aufweist: Zuführen eines ersten Funkfrequenzsignals von der ersten Antenne (11, 21) zu dem Diversity-Empfänger (5) über das erste Antennenkabel (3, 4), Zuführen eines zweiten Funkfrequenzsignals von einer zweiten Antenne zu dem Diversity-Empfänger (5) über das zweite Antennenkabel (3, 4), und Anlegen einer Gleichspannung an das erste Antennenkabel (3, 4), wobei die Größe der Gleichspannung unabhängig von den Funkfrequenzsignalen ist, dadurch gekennzeichnet, daß das Verfahren ferner den Schritt der Detektion einer Spannungsänderung in der Gleichspannung zum Erzeugen eines Detektionssignals aufweist.

18. Verfahren nach Anspruch 17, welches ferner in Reaktion auf das Detektionssignal, den Schritt einer Anzeige des Ausfalls entweder des ersten oder des zweiten Antennenkabels aufweist.

19. Verfahren nach Anspruch 18, wobei der Anzeigeschritt, in Reaktion auf das Detektionssignal den Schritt, eine LED leuchten zu lassen, aufweist.

20. Verfahren nach Anspruch 19, wobei der Anzeigeschritt, in Reaktion auf das Detektionssignal den Schritt, einen Tongenerator einen Alarmton erzeugen zu lassen, aufweist.

21. Verfahren nach Anspruch 19, welches ferner den Schritt des selektiven Empfangs des ersten oder des zweiten Funkfrequenzsignals bei dem Diversity-Empfänger enthält.

## Revendications

1. Dispositif de réception en diversité comprenant une pluralité d'antennes (1) (2) pour recevoir des signaux de radiofréquence, une section de réception en diversité (5) pour recevoir les signaux de radiofréquence arrivant par la pluralité d'antennes (1) (2), au moins une ligne d'amenée d'antenne (3) (4) connectant une antenne associée de la pluralité d'antennes (1) (2) à la section de réception en diversité (5), et des moyens (54) pour appliquer une tension continue à une ligne d'amenée d'antenne (3) (4), l'amplitude de la tension continue étant indépendante des signaux de radiofréquence, caractérisé en ce qu'il est fourni des moyens (53) pour détecter un changement de la tension continue, de telle sorte qu'une rupture de la ligne d'amenée d'antenne (3) (4) peut être détectée indépendamment des niveaux des signaux de radiofréquence.

2. Dispositif selon la revendication 1, dans lequel une antenne de la pluralité d'antennes (1) (2) comprend un élément de rayonnement (11) (21), et un circuit de blocage de signal (12) (22) connecté à l'une de ses extrémités à l'élément de rayonnement (11) (21) et à l'autre de ses extrémités à la masse pour arrêter un signal de radiofréquence et présenter une faible résistance par rapport à un courant continu.

3. Dispositif selon la revendication 2, dans lequel le circuit de blocage de signal comprend une bobine d'arrêt (12) (22).

4. Dispositif selon la revendication 2, dans lequel l'antenne (1) (2) a un élément de rayonnement (11) (21) dont une extrémité est connectée à une extrémité de la ligne d'amenée d'antenne (3) (4) et une structure dans laquelle l'élément de rayonnement (11) (21) est connecté à la masse via le circuit de blocage de signal (12) (22).

5. Dispositif selon la revendication 4, dans lequel les moyens de détection comprennent une diode électroluminescente (539) pour signaler la rupture d'une ligne d'amenée d'antenne (3) (4).

6. Dispositif de réception en diversité selon la revendication 1, comprenant seulement deux antennes (1) (2) ayant chacune un élément de rayonnement (11) (21), une bobine d'arrêt (12) (22) connectant les deux antennes (1) (2) l'une à l'autre, des première et seconde lignes d'amenée d'antenne (3) (4), chacune étant connectée à une extrémité à une antenne respective des deux antennes (1) (2), des moyens (51) pour connecter sélectivement l'autre extrémité des première et seconde lignes d'amenée d'antenne (3) (4) à la section de réception en diversité (5) par rapport à un courant continu, et une source d'alimentation (54) connectée à l'autre extrémité de la première ligne d'amenée d'antenne (3) pour appliquer un potentiel continu prédéterminé à l'autre extrémité de la première ligne d'amenée d'antenne, dans lequel le circuit de détection (53) est connecté à l'autre extrémité d'une des lignes d'amenée d'antenne (3) pour détecter une variation d'un potentiel continu apparaissant sur l'autre extrémité de l'autre ligne d'amenée d'antenne (4).

7. Dispositif selon la revendication 6, dans lequel le circuit de détection (53) comprend une diode électroluminescente (539) pour signaler la rupture d'une ligne d'amenée d'antenne (3) (4).

8. Dispositif selon la revendication 6 ou la revendication 7, dans lequel les moyens d'alimentation de tension (54) appliquent une tension continue à la fois aux premiers et seconds moyens d'amenée d'antenne (3) (4), et dans lequel les moyens de détection (53) détectent un changement de la tension continue appliquée sur n'importe lequel des premiers et seconds moyens d'amenée d'antenne (3) (4).

9. Dispositif selon la revendication 8, dans lequel les moyens de détection (53) comprennent des premiers moyens (533) pour détecter le changement pour produire un signal de détection, et des moyens d'alerte (539) sensibles au signal de détection pour produire un signal d'alerte.

10. Dispositif selon la revendication 9, dans lequel les moyens d'alerte comprennent une diode électroluminescente (DEL) qui s'éclaire en réponse au signal de détection.

11. Dispositif selon la revendication 9, dans lequel les moyens d'alerte comprennent un dispositif émettant des bips pour générer une tonalité d'alerte en réponse au signal de détection.

12. Dispositif selon la revendication 6 ou la revendication 7, dans lequel les moyens de réception en diversité (5) comprennent un commutateur d'antenne (51) pour choisir un des signaux de radiofréquence en réponse à un signal de commande de commutation, et un récepteur en diversité (52) pour recevoir le signal de radiofréquence choisi et produire le signal de commande de commutation basé sur les signaux de radiofréquence.

13. Dispositif selon l'une quelconque des revendications précédentes, dans lequel les moyens de détection (53) comprennent des premiers et seconds moyens de filtre passe-bas (12) (22) dont les entrées sont couplées à une extrémité des premiers et seconds moyens d'amenée d'antenne (3) (4), respectivement, des premiers et seconds moyens d'inversion (531) (532) dont les entrées sont couplées aux sorties des premiers et seconds moyens de filtre passe-bas (12) (22), respectivement, des moyens de porte NON-ET (533) dont les deux entrées sont couplées aux sorties des premiers et seconds moyens d'inversion (531) (532), respectivement, et des moyens de diode électroluminescente (539) couplés entre la sortie des moyens de porte NON-ET (533) et la masse.

14. Dispositif selon l'une quelconque des revendications 1 à 12, dans lequel les moyens de détection (53) comprennent des premiers et seconds moyens de filtre passe-bas (536, 534) (537, 535) dont les entrées sont couplées à une extrémité des premiers et seconds moyens d'amenée d'antenne (3) (4), respectivement, des premiers et seconds moyens d'inversion (531) (532) dont les entrées sont couplées aux sorties desdits premiers et seconds moyens de filtre passe-bas (536, 534) (537, 535), respectivement, des moyens de porte NON-ET (533) dont les deux entrées sont couplées aux sorties des premiers et seconds moyens d'inversion (531) (532), respectivement, et des moyens de génération de tonalité pour générer une tonalité d'alerte en réponse à un changement d'état de la sortie desdits moyens de porte NON-ET (533).

15. Dispositif selon l'une quelconque des revendications 1 à 12, dans lequel les moyens de détection comprennent des moyens de filtre passe-bas (536, 534) (537, 535) dont l'entrée est couplée à l'extrémité des seconds moyens d'amenée d'antenne (3) (4), des moyens d'inversion (531) (532) dont l'entrée est couplée à la sortie des moyens de filtre passe-bas (536, 534) (537, 535), et des moyens de diode électroluminescente (539) connectés entre la sortie des moyens d'inversion (531) (532) et la masse.

16. Dispositif selon la revendication 15, dans lequel les moyens de détection comprennent des moyens de filtre passe-bas (536, 534) (537, 535) dont l'entrée est couplée à l'extrémité des seconds moyens d'amenée d'antenne (3) (4), et des moyens d'alerte pour générer une tonalité d'alerte en réponse à la sortie des moyens de filtre passe-bas.

17. Procédé de détection de la rupture de n'importe laquelle de première et seconde lignes d'amenée d'antenne (3) (4) qui amènent des signaux de radiofréquence depuis des première et seconde antennes (11) (21), respectivement, à un récepteur en diversité (5), le procédé comprenant les étapes d'amenée d'un premier signal de radiofréquence depuis la première antenne (11) (21) au récepteur en diversité (5) par l'intermédiaire de la première ligne d'amenée d'antenne (3) (4), d'amenée d'un second signal de radiofréquence depuis une seconde antenne au récepteur en diversité (5) par l'intermédiaire de la seconde ligne d'amenée d'antenne (3) (4), et d'application d'une tension continue à la première ligne d'amenée d'antenne (3) (4), l'amplitude de la tension continue étant indépendante des signaux de radiofréquence, caractérisé en ce que le procédé comprend en outre l'étape de détection d'un changement de tension dans la tension continue pour produire un signal de détection.

18. Procédé selon la revendication 17, comprenant en outre l'étape, en réponse au signal de détection, d'avertissement de la panne de la première ou bien la seconde ligne d'amenée d'antenne.

19. Procédé selon la revendication 18, dans lequel l'étape d'avertissement comprend l'étape, en réponse au signal de détection, d'éclairage d'une diode électroluminescente.

20. Procédé selon la revendication 19, dans lequel l'étape d'avertissement comprend l'étape, en réponse au signal de détection, de génération d'une tonalité d'alerte par un générateur de tonalité.

21. Procédé selon la revendication 19, comprenant en outre l'étape de réception sélective de l'un des premier et second signaux de radiofréquence au récepteur en diversité.
